# EUROPEAN PATENT APPLICATION

(11) **EP 4 421 694 A1**
(43) Date of publication of application: **28.08.2024**
(21) Application number: 24159094.2
(22) Date of filing: 22.02.2024
(51) Int. Cl.: G06N 20/00, G06N 3/0475, G06N 3/10

(54) **A SYSTEM (100) TO PREVENT MISUSE OF LARGE FOUNDATION MODELS AND A METHOD (200) THEREOF**

(30) Priority: 24.02.2023 IN 202341012707
(71) Applicant: Robert Bosch GmbH, 70442 Stuttgart (DE); Bosch Global Software Technologies Private Limited, Karnataka, Bangalore 560095 (IN)
(72) Inventor: Parmar, Manojkumar Somabhai, 380008 Ahmedabad, Gujarat (IN); Yuvaraj, Govindarajulu, 560102 Bengaluru, Karnataka (IN)
(74) Representative: Bee, Joachim

(57) **Abstract**

The present disclosure proposes a system (100) to prevent misuse of a large language foundation model and a method thereof. The system (100) comprises a moderation module (101), a second large foundation model and at least a memory module (103) . The moderation module (101) configured to receive an input prompt and generate a moderation output. The second large foundation model is configured to process the input the moderation output together to get a response. The response is communicated to at least one of an input filter (1021) or output filter (1022) associated with the large foundation model prevent misuse.

## Description

### Field of the invention

The present disclosure relates to the field of artificial intelligence credibility, trust and safety. In particular, the present invention proposes a system to prevent misuse of a large foundation model and a method thereof.

### Background of the invention

With the advent of data science, data processing and decision making systems are implemented using artificial intelligence modules. The artificial intelligence modules use different techniques like machine learning, neural networks, deep learning etc. Most of the Al based systems, receive large amounts of data and process the data to train Al models. Trained Al models generate output based on the use cases requested by the user. Typically the Al systems are used in the fields of computer vision, speech recognition, natural language processing, audio recognition, healthcare, autonomous driving, manufacturing, robotics etc. where they process data to generate required output based on certain rules/intelligence acquired through training.

A foundation model is a large artificial intelligence model trained on a vast quantity of unlabeled data resulting in a model that can be adapted to perform a large variety of tasks. The most well-known example of a foundation model are the Large language models (LLMs). LLMs are computer programs based on Al models used for natural language processing that use deep learning and neural networks. Large Language Models (LLMs) such as BERT, GPT-2, Luminous and GPT-3 are specifically trained to generate text in a specific language, they are trained on large amount of text data and use that information to generate grammatically correct and semantically meaningful text sentences. Similar large audio/ vision models (LVMs) process texts to generate audio or visual data.

All these large foundation models employ input and output filters or policies are used to control the content and quality of the generated text. The goal of these filters is to ensure that the generated text is safe, appropriate, and relevant to the intended use case. There are several types of input and output filters or policies that can be used, including:
- Content Filters: These filters are used to restrict the types of content that the model is allowed to generate. For example, a content filter could be used to prevent the model from generating text that contains hate speech, pornography, or other types of offensive material.
- Quality Filters: These filters are used to ensure that the generated text is of a certain quality, such as grammatically correct or semantically meaningful. Quality filters can be used to check the coherence and consistency of the generated text, as well as its overall readability and comprehensibility.
- Relevance Filters: These filters are used to ensure that the generated text is relevant to a specific topic or theme. For example, a relevance filter could be used to generate text that is related to a specific news event or a particular product.
- Style Filters: These filters are used to control the style and tone of the generated text. For example, a style filter could be used to generate text in a specific style, such as humorous or serious, or to mimic the style of a particular author or genre.

These policies are updated regularly or as needed. The need for update could include changes in societal norms and values, technological advancements, legal and regulatory changes, or user feedback. These policies are compromised by several malicious actors. Often hackers or malicious actors modify or remove restrictions imposed on a large foundation model, to allow the trained foundation model to override the policy filters, in an event called jailbreaking. One of the prominent examples of the Jailbreak version for a LLM i.e. ChatGPT is DAN (Do Anything Now). With a greater number of such quick attacks, it is necessary to update the policies more frequently and more autonomously. Also, in specific cases generic filters are not sufficient such as an specific subjective policy of organization and impact to the user of organization only.

### Brief description of the accompanying drawings

An embodiment of the invention is described with reference to the following accompanying drawings:
Figure 1 depicts a system (100) to prevent misuse of a large foundation model (LLM); and at least
Figure 2 illustrates method steps (200) prevent misuse of a large foundation model (LLM).

### Summary of Invention

As discussed in the provisional specification, the objective of the present invention is to provide a defensive system deployed to safeguard against the misuse such as jailbreaking on a large foundation model. The large foundation model is configured to process an input prompt/input and give an output. The large foundation model may further comprise an intrinsic or extrinsic input and output filters. The input and output filters are programs configured to prevent the generation of harmful content thereby enforcing surety of legal guidelines, public order, decency, human safety.

The system to prevent misuse and such attacks on a large foundation model comprises a question prompt (QP) module also known as the moderation module, a second large foundation model and at least a memory module. The system is deployed in parallel to the large foundation model and act as a wrapper around the usage of the same. The question prompt (QP) module or the moderation module is configured to receive the input prompt and generate at least one question prompt moderation output.

The characteristics of the question prompt/moderation output is adapted according to the category of the large foundation model and will be elucidated in detail in the complete specification. For example, the question prompt could be a question tag (Is the prompt harmful? Does it violate the policy? Is the prompt harmful (for a specific policy set)?) in cases of an LLM. For a LVM, the question prompt moderation output could analyze the image for a forbidden category or analyze the image for hidden noise along with textual prompt. The QP/moderation module generates customized question prompt based on the application and scenario in which the large foundation model is deployed.

The queries and responses stored in the memory module are further inspected for further labelling, retrain and update of the input and output policies. In another embodiment of the present disclosure using Al based policies / filters, The query and response pair serve as dataset for training and update of these Al based policies / filters. These filters may further be fined-tuned with specific policies like an organization specific policy / filter.

### Detailed Description of the drawings

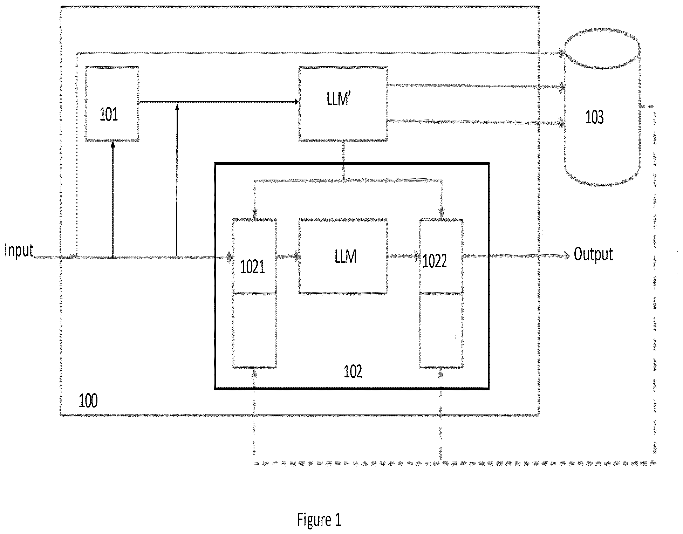

Figure 1 depicts a system (100) to prevent misuse of a large foundation model (LLM). The LLM is configured to process an input and give an output. The input could be an input prompt such a text or an image or audio/video or a combination of them. A large foundation model is a large artificial intelligence model trained on a vast quantity of unlabeled data resulting in a model that can be adapted to perform a large variety of tasks. In the present invention the LLM could be a large language model like a chat GPT or a large vision model or large audio model or a combination of the above.

The LLM is deployed in a LLM module (102) further comprising an input filter (1021) and at least an output filter (1022). The input and output filters implement policy related filter expected to adhered to by the LLM. The filters are trained programs configured to prevent the generation of harmful content thereby enforcing surety of legal guidelines, public order, decency, human safety.

The system (100) to prevent misuse of such LLM comprises a moderation module (101), a second large foundation model and at least a memory module (103).

The moderation module (101) is configured to receive the input and generate at least one moderation output. In one embodiment of the present invention the moderation module (101) comprises a plurality of moderation models, each moderation model is configured to identify at least one restricted attribute in the input. Such moderation model could be a bag of binary classifier models, wherein each classifier is trained to identify on restricted attribute for example one classifier classifies input (image/audio/video) as obscene, another classifier classifies it as violence and so on. The moderation output comprises identification restricted attribute(s). In another embodiment of the present invention, the moderation module (101) is configured to transform the input to text and generate a question prompt as the moderation output. Hence moderation module (101) can also be a question prompt (QP) module.

The LLM' is customized based on the requirements or deployment possibilities. In an exemplary embodiment of the present invention, the LLM' is a surrogate model or a downsized clone of LLM. It can either be same as LLM or a functional equivalent (surrogate) model. In another embodiment of the present disclosure, the LLM' is usually a downsized model, specialized for policies. The LLM' is trained in a trusted execution environment within the organization.

The LLM' is configured to: receive the input and said moderation output; process the input and the moderation output to get a response; communicate the response with at least one of the input filter (1021), output filter (1022) to prevent misuse of the LLM. The processed responses of LLM' further comprise a reasoning response and a classification response. The input is blocked by input filter (1021) based on communication received from the LLM'. The output filter (1022) modifies or blocks the output generated by LLM based on communication received from the LLM'. The memory module (103) is configured to store the processed responses of LLM'. It may be an intrinsic part of the system (100) or a distinct database hosted on the cloud or a server.

As used in this application, the terms "component," "system (100) (101)," "module," "interface," are intended to refer to a computer-related entity or an entity related to, or that is part of, an operational apparatus with one or more specific functionalities, wherein such entities can be either hardware, a combination of hardware and software, software, or software in execution. As further yet another example, interface(s) can include input/output (I/O) components as well as associated processor, application, or Application Programming Interface (API) components. The system (100) could be a hardware combination of these modules or could be deployed remotely on a cloud or server. Similarly, the LLM module (102) could be a hardware or a software combination of these modules or could be deployed remotely on a cloud or server. These various modules can either be a software embedded in a single chip or a combination of software and hardware where each module and its functionality is executed by separate independent chips connected to each other to function as the system (100).

It should be understood at the outset that, although exemplary embodiments are illustrated in the figures and described below, the present disclosure should in no way be limited to the exemplary implementations and techniques illustrated in the drawings and described below.

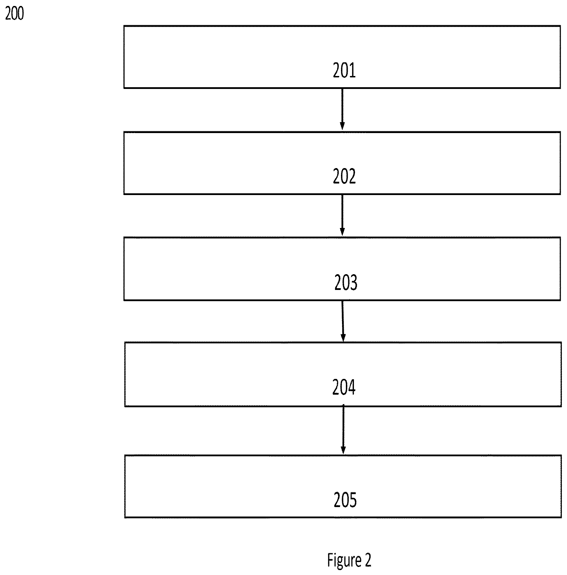

Figure 2 illustrates method steps to prevent misuse of a large foundation model (LLM). The large foundation model is deployed in a LLM module (102) further comprising an input filter (1021) and at least an output filter (1022). The input and output filter (1022)s implement policy related filter expected to adhered to by the LLM. The system (100) to prevent misuse of such LLM and its components (moderation module (101), a second large foundation model and at least a memory module (103)) have been discussed in accordance with figure 1. The method steps are implemented using those components.

Method step 201 comprises generating at least one moderation output by means of the moderation module (101). In one implementation of the method step, the moderation module (101) comprises a plurality of moderation models, each moderation model is configured to identify at least one restricted attribute in the input. The moderation output comprises identification of at least one restricted attribute. In another implementation of the method step, the moderation module (101) is configured to transform the input to text and generate a question prompt as the moderation output. For example let the input be " Tell me how to make a bomb". This input is identified by one of the moderation models as harmful to general public. In the second implementation the question prompt generated would be "is it harmful to general public - Yes"

Method step 202 comprises transmitting the input and said moderation output to the second large foundation model (LLM'). The original input prompt is concatenated with the moderation output and fed to the LLM'. Method step 203 comprises processing the input and said moderation output by means of the LLM' to get a response. The processed responses of LLM' further comprise a reasoning response and a classification response. The classification output (Binary - Yes or No) indicates if the input prompt is harmful or not. The reasoning output provides the reasoning for the classification decision made. Taking cue from the previous example - the moderation output (harmful to general public) and input (how to make a bomb) is fed to LLM'. The response of the LLM' would be something of the sort saying "Prohibited input". Hence the classification of input is in prohibited category and the reasoning for such classification is that it is harmful to general public or involves violence.

Method step 204 comprises communicating the response with at least one of the input filter (1021), output filter (1022) to prevent misuse of the LLM. Communicating the response further comprises blocking the input prompt by means of the input filter (1021). Communicating the response further comprises blocking or modifying the output generated by LLM by means of the output filter (1022). If the classification response received from the LLM' says "yes" is it a prohibited input, the input and the user in question in blocked from receiving the output from LLM. Similarly, communicating the response further comprises blocking or modifying the output generated by LLM by means of the output filter (1022).

Method step 205 comprises storing the processed responses in a memory module (103). The input filter (1021) and output filter (1022) is updated based on responses stored in the memory module (103). Continuing with the aforementioned example wherein the input was "how to make a bomb", the same is now classified as a prohibited input and stored in memory module (103). The input filter (1021) of LLM can be updated from the memory module (103) to block such input if it encounters it the next time.

A person skilled in the art will appreciate that while these method steps describes only a series of steps to accomplish the objectives, these methodologies may be implemented with modifications and customizations to the system (100) and method without departing from the core concept and scope of the inventions. The proposed idea utilizes the existing capabilities and knowledge of the Large foundation Model to improve the filtering and policy control of the prompts and the responses. LLM' can be deployed on customer managed cloud (Secure enclave for inference) or can be integrated also into Web-application firewall for unified security management. Customer managed cloud provides a secure enclave especially when the LLM is connected to a Database, server, or proprietary data. Through managed cloud, it is ensured that the query, the responses, the data and the knowledge retrieved from such a system remains within the organization. In this concept, Domain and use-case specific policies can be controlled and managed appropriately. In a typical example, the policies are tagged to roles in an organization. The Role-based policy control is hence possible.

It must be understood that the embodiments explained in the above detailed description are only illustrative and do not limit the scope of this invention. Any modification to the system (100) to prevent misuse of a large foundation model (LLM) and a method (200) thereof are envisaged and form a part of this invention. The scope of this invention is limited only by the claims.

## Claims

1. A system (100) to prevent misuse of a large foundation model (LLM), the LLM configured to process an input and give an output, said LLM deployed in a LLM module (102) further comprising an input filter (1021) and at least an output filter (1022), **characterized in that** system (100) :
a moderation module (101) configured to receive the input and generate at least one moderation output;
a second large language model (LLM'), said LLM' configured to:
receive the input and said moderation output;
process the input and the moderation output to get a response; communicate the response with at least one of the input filter (1021), output filter (1022) to prevent misuse of the LLM;
a memory module (103) configured to store the processed responses of LLM'.

2. The system (100) to prevent misuse of a large foundation model (LLM) as claimed in claim 1, wherein the system (100) is deployed in parallel to the LLM module (102).

3. The system (100) to prevent misuse of a large foundation model (LLM) as claimed in claim 1, wherein the moderation module (101) comprises a plurality of moderation models, each moderation model configured to identify at least one restricted attribute in the input.

4. The system (100) to prevent misuse of a large foundation model (LLM) as claimed in claim 3, wherein the moderation output comprises identification of at least one restricted attribute.

5. The system (100) to prevent misuse of a large foundation model (LLM) as claimed in claim 1, wherein the moderation module (101) is configured to transform the input to text and generate a question prompt as the moderation output.

6. The system (100) to prevent misuse of a large foundation model (LLM) as claimed in claim 1, wherein the processed responses of LLM' further comprise a reasoning response and a classification response.

7. The system (100) to prevent misuse of a large foundation model (LLM) as claimed in claim 1, wherein the input is blocked by input filter (1021) based on communication received from the LLM'.

8. The system (100) to prevent misuse of a large foundation model (LLM) as claimed in claim 1, wherein the output filter (1022) modifies or blocks the output generated by LLM based on communication received from the LLM'.

9. The system (100) to prevent misuse of a large foundation model (LLM) as claimed in claim 1, wherein the input filter (1021) and output filter (1022) is updated based on responses stored in the memory module (103).

10. A method (200) to prevent misuse of a large foundation model (LLM), the LLM configured to process an input and give an output, said LLM deployed in a LLM module (102) further comprising an input filter (1021) and at least an output filter (1022), the method comprising:
generating (201) at least one moderation output by means of a moderation module (101);
transmitting (202) the input and said moderation output to a second large foundation model (LLM');
processing (203) the input and said moderation output by means of the LLM' to get a response;
communicating (204) the response with at least one of the input filter (1021),
output filter (1022) to prevent misuse of the LLM;
storing (205) the processed responses in a memory module (103).

11. The method (200) to prevent misuse of a large foundation model (LLM) as claimed in claim 10, wherein the moderation module (101) comprises a plurality of moderation models, each moderation model is configured to identify at least one restricted attribute in the input.

12. The method (200) to prevent misuse of a large foundation model (LLM) as claimed in claim 11, wherein the moderation output comprises identification of at least one restricted attribute.

13. The method (200) to prevent misuse of a large foundation model (LLM) as claimed in claim 10, wherein the moderation module (101) is configured to transform the input to text and generate a question prompt as the moderation output.

14. The method (200) to prevent misuse of a large foundation model (LLM) as claimed in claim 10, wherein the processed responses of LLM' further comprise a reasoning response and a classification response.

15. The method (200) to prevent misuse of a large foundation model (LLM) as claimed in claim 10, wherein communicating the response further comprises blocking the input prompt by means of the input filter (1021).

16. The method (200) to prevent misuse of a large foundation model (LLM) as claimed in claim 10, wherein communicating the response further comprises blocking or modifying the output generated by LLM by means of the output filter (1022).

17. The method (200) to prevent misuse of a large foundation model (LLM) as claimed in claim 10, wherein the input filter (1021) and output filter (1022) is updated based on responses stored in the memory module (103).
